# DEMANDE DE BREVET EUROPEEN

(11) **EP 0 824 199 A1**
(43) Date de publication de la demande: **18.02.1998**
(21) Numéro de dépôt: 97401873.1
(22) Date de dépôt: 04.08.1997
(51) Int. Cl.: F16C 7/02

(54) **Bielle de moteur à combustion interne**

(30) Priorité: 05.08.1996 FR 9609859
(71) Demandeur: Ascometal, 92800 Puteaux (FR)
(72) Inventeur: Genouille, Michel, 91370 Verrieres le Buisson (FR)
(74) Mandataire: Obolensky, Michel

(57) **Abrégé**

Bielle forgée, notamment de moteur à combustion interne, comportant un corps (1), un pied (2) de bielle et une tête (3) de bielle, formant deux paliers de pied de bielle et de tête de bielle, destinés à recevoir respectivement, un axe de piston et un maneton de vilebrequin, ladite bielle étant constituée de deux demi bielles (5), sensiblement symétriques par rapport à un plan médian (6) longitudinal de la bielle, plan comprenant l'axe longitudinal de la bielle, leur surface de jointure (9) étant essentiellement disposée dans ledit plan médian (6), lesdites demi bielles (5) qui portent chacune un demi-palier (7) de bielle et un demi-palier (8) de tête de bielle, étant liées entre elles par des moyens d'immobilisation, situés de part et d'autre du pied et de la tête de bielle, caractérisée en ce que les moyens d'immobilisation comprennent en outre, ménagées sur la surface de jointure (9) des demi bielles, des stries (10) s'emboîtant de manière complémentaire les unes dans les autres, stries assurant, par leur forme, un blocage en glissement des deux demi bielles (5) dans le plan de jointure, notamment dans l'axe longitudinal de la bielle et dans l'axe du maneton et du piston simultanément.

## Description

La présente invention concerne une bielle forgée, notamment de moteur à combustion interne, comportant un corps, un pied de bielle et une tête de bielle formant deux paliers de pied de bielle et de tête de bielle, destinés à recevoir respectivement, un axe de piston et un maneton de vilebrequin, ladite bielle étant constituée de deux demi bielles, sensiblement symétriques par rapport à un plan médian longitudinal de la bielle, plan comprenant l'axe longitudinal de la bielle, leur surface de jointure étant essentiellement disposée dans le plan médian, lesdites demi bielles qui portent chacune un demi-palier de pied de bielle et un demi-palier de tête de bielle étant liées entre elles par au moins un moyen d'immobilisation situé de part et d'autre du pied et de la tête de bielle.

Il est connu une bielle comportant un corps, un pied de bielle et une tête de bielle formant des paliers cylindriques, destinés à recevoir, d'une part, un axe de piston et, d'autre part, un maneton de vilebrequin. La bielle est constituée de deux demi bielles forgées qui sont assemblées l'une sur l'autre le long d'une surface de jointure et bloquées l'une sur l'autre par des moyens d'immobilisation. Les deux demi bielles, comportant chacune deux mi-paliers, sont sensiblement symétriques par rapport au plan médian longitudinal de la bielle et la surface de jointure est essentiellement disposée dans ledit plan médian longitudinal. Au moins un élément d'immobilisation est situé sur le corps de la bielle entre la tête de bielle et le pied de bielle.

Cette conception de bielle forgée, formée de demi bielles totalement identiques pour des raisons d'industrialisation et de production par des procédés de forgeage implique la nécessite d'interdire tout micro déplacement relatif des demi bielles qui pourrait engendrer un phénomène de « fretting » sur les surfaces en contact. Une immobilisation totale peut être réalisée au moyen de vis centreuses, mais cette technique entraîne des difficultés de réalisation et des coûts de production.

Pour éviter le déplacement d'une demi-bielle par rapport à l'autre, il est possible d'envisager la réalisation de stries par exemple linéaires ou encore linéaires et croisées. Or les stries linéaires ne permettent pas un montage par superposition des deux demi bielles sans risque d'un positionnement décalé d'une demi bielle par rapport à l'autre, de la valeur d'un pas ou de deux pas de stries.

De plus, les tries linéaires n'évitent pas la possibilité du déplacement d'une demi bielle par rapport à l'autre dans la direction longitudinale des stries.

L'invention a pour but de proposer une bielle forgée, notamment de moteur à combustion interne, qui présente par la superposition de deux demi bielles appairées et usinées simultanément, un blocage d'une demi bielle par rapport à l'autre dans le plan de jointure sans possibilité d'un décalage et d'un déplacement.

Elle a pour objet une bielle forgée qui se caractérise en ce que les moyens d'immobilisation comprennent en outre, ménagées sur la surface de jointure des demi bielles, des stries s'emboîtant de manière complémentaire les unes dans les autres, stries assurant, par leur forme, un blocage en glissement des deux demi bielles dans le plan de jointure, un blocage en glissement dans l'axe longitudinal de la bielle et dans l'axe du maneton et du piston simultanément.

Les autres caractéristiques de l'invention sont :
- le moyen d'assemblage est composé de stries de forme courbe.
- le moyen d'assemblage est composé de stries en forme d'arcs de cercle.
- le moyen d'assemblage est composé de stries en forme d'arcs de cercle concentriques dont la concavité est orientée dans une seule direction.
- le moyen d'assemblage est composé de stries dont la concavité est orientée suivant un axe confondu avec l'axe longitudinal de la bielle.

L'invention concerne également un procédé de réalisation d'une bielle à partir de demi bielles brutes de forgeage, dans lequel on place des demi bielles brutes en périphérie d'un plateau circulaire pour la distribution de différentes opérations d'usinage successives, caractérisé en ce que :
- on place et on bride les demi bielles brutes de forge par deux, de manière diamétralement opposée, la surface de jointure restant libre,
- on effectue sur chacune des deux demi bielles une opération de perçage de lamage et de dressage de la surface de jointure, perçage et lamage étant destinés à l'assemblage mécanique desdites demi bielles et au piétage des demi bielles sur le plateau,
- on réalise, sur la surface de jointure dressée des deux demi bielles, des stries assurant, par leur forme, après assemblage des deux demi bielles en vis à vis, un blocage en glissement dans le plan de jointure, blocage notamment dans l'axe longitudinal de la bielle et dans l'axe du maneton et ou du piston simultanément.
- on effectue le dressage de faces parallèles définissant l'épaisseur de la tête ou du pied de bielle,
- on assemble les deux demi bielles par la rotation à 180° d'une demi bielle par rapport à un axe de rotation parallèle au plan du plateau circulaire, les stries s'emboîtant de manière complémentaire les unes dans les autres ,
- on effectue l'usinage des alésages formant paliers de tête et pied de bielle.

L'invention concerne également un dispositif pour la réalisation d'une bielle par la mise en oeuvre du procédé, à partir de demi bielles brutes de forgeage, dispositif composé d'un plateau circulaire pour la distribution de différentes opérations d'usinage successives, caractérisé en ce qu'il comprend de manière diamétralement opposée les postes d'usinage de même fonction suivants :
- une bride pour les demi bielles brutes de forge,
- un poste de perçage, de lamage et de dressage de la surface de jointure,
- un poste de piétage,
- un poste de crantage pour l'usinage de stries,
- un poste de dressage de faces parallèles définissant l'épaisseur de la tête ou du pied de bielle,
- un poste d'assemblage rotatif de deux demi bielles pour la pose de deux demi bielles l'une en vis à vis de l'autre, les stries s'emboîtant de manière complémentaire les unes dans les autres,
- un poste d'usinage des alésages qui forment paliers de tête et pied de bielle.

La description qui suit et les dessins annexés, le tout donné à titre d'exemple non limitatif, fera bien comprendre l'invention.

La figure 1 est une vue générale en perspective d'une bielle selon l'invention.

La figure 2 présente, en vue de profil, une demi bielle fixée sur le plateau.

La figure 3 présente le dispositif selon l'invention, en vue de dessus.

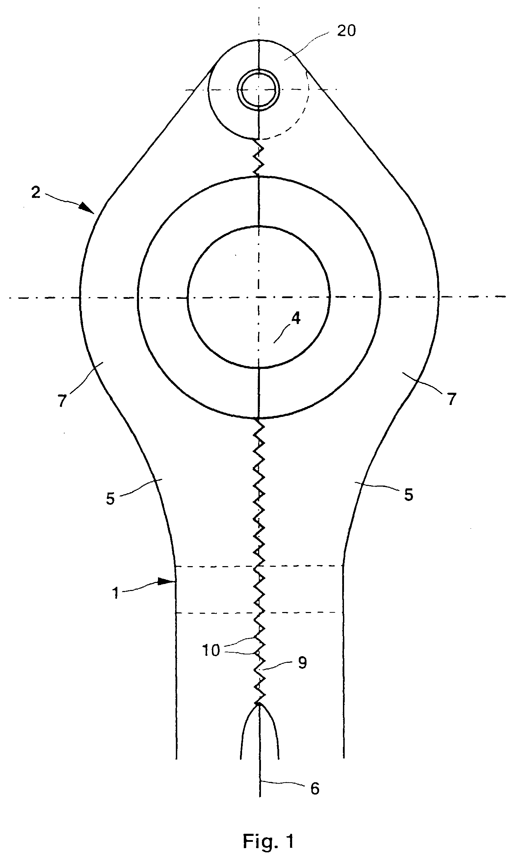

La figure 1 présente une bielle selon l'invention, notamment de moteur à combustion interne qui comporte un corps 1, un pied 2 de bielle et une tête 3 de bielle non représentée sur la figure, pied et tête de bielle formant des paliers destinés, chacun, à recevoir un axe de piston 4 cylindrique, ou un maneton de vilebrequin non représenté sur ladite figure. La bielle est constituée de deux demi bielles 5, symétriques par rapport à un plan médian longitudinal 6 de ladite bielle, les parties 5, comportant à chacune de leurs extrémités un demi-palier 7,8.

La surface de jointure 9 des deux demi bielles 5, est essentiellement disposée dans le plan médian 6 et lesdites demi bielles 5 sont liées entre elles par un moyen d'immobilisation ménagé sur le corps 1 de bielle entre le pied 2 et la tête 3 de bielle. Dans un exemple de réalisation, le moyen d'immobilisation est constitué de deux boulons.

La bielle peut comprendre également en une de ses extrémités une clé 20 de verrouillage.

Dans le cas d'un montage avec des boulons n'ayant pas de fonction de centrage, les jeux de montage n'assurent pas une immobilisation totale des demi bielles entre elles.

Une bielle génère, en fonctionnement, des efforts de contact entre demi-paliers 7, de bielle et axe de piston 4. Ces efforts de contact engendrent des composantes qui provoquent un déplacement des demi bielles 5 l'une par rapport à l'autre.

Ce déplacement, bien que très faible peut conduire à la dégradation des surfaces de l'axe de piston, du maneton et des paliers et nuire au bon fonctionnement de la bielle.

Selon l'invention, les moyens d'immobilisation, comportent en outre, ménagées sur la surface de jointure 9 des demi bielles, des stries 10 s'emboîtant de manière complémentaire les unes dans les autres, stries assurant, par leur forme, un blocage en glissement des deux demi bielles 5 dans le plan de jointure, notamment dans l'axe longitudinal de la bielle et dans l'axe du maneton et du piston simultanément.

De préférence, et pour minimiser les coûts, les stries 10 sont de forme courbe, en arcs de cercle.

Le moyen d'assemblage est composé de stries 10 en forme d'arcs de cercle concentriques dont la concavité est orientée dans une seule direction, comme par exemple, suivant un axe confondu avec l'axe longitudinal de la bielle.

L'invention concerne également un procédé de réalisation d'une bielle à partir de demi bielles brutes de forgeage, dans lequel on place des demi bielles brutes en périphérie d'un plateau 11 circulaire pour la distribution de différentes opérations d'usinage successives, caractérisé en ce que :
- on place et on bride les demi bielles brutes de forge par deux, de manière diamétralement opposée, la surface de jointure restant libre,
- on effectue sur chacune des deux demi bielles une opération de perçage de lamage et de dressage de la surface 9 de jointure, perçage et lamage étant destinés à l'assemblage mécanique desdites demi bielles et au piétage des demi bielles sur le plateau,
- on réalise, sur la surface de jointure dressée des deux demi bielles, des stries assurant, par leur forme, après assemblage des deux demi bielles en vis à vis, un blocage en glissement dans le plan de jointure, blocage notamment dans l'axe longitudinal de la bielle et dans l'axe du maneton et ou du piston simultanément.
- on effectue le dressage des faces parallèles définissant l'épaisseur de la tête ou du pied de bielle,
- on assemble les deux demi bielles par la rotation à 180° d'une demi bielle par rapport à un axe de rotation parallèle au plan du plateau circulaire, les stries s'emboîtant de manière complémentaire les unes dans les autres, avec une seule position possible.
- on effectue l'usinage des alésages formant paliers de tête et pied de bielle.

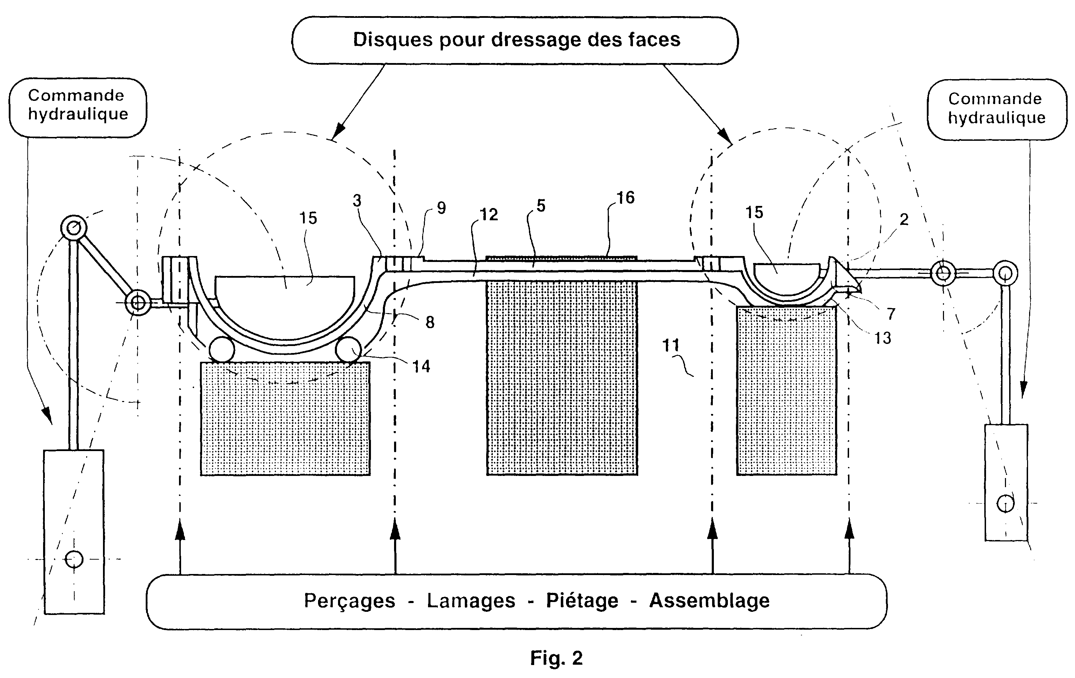

La mise en position des demi bielles brutes de forge sur le plateau 11 peut être réalisée comme représenté sur la figure 2. Chaque demi bielle 5 brute de forge comporte des nervures 12 extérieures sur toute la longueur, et repose du côté du pied 2 de bielle sur un appui 13 simple dont le profil s'inscrit dans des logements, et du côté de la tête 3 de bielle sur deux piges 14 cylindriques s'inscrivant également dans des nervures de la tête de bielle. Ce type de montage permet, quelles que soient les valeurs des rayons des peaux de forge dans ces zones, de positionner la surface 9 de jointure de telle sorte que les épaisseurs de chape soient respectées en tête et en pied de bielle, et donc, de minimiser la dispersion des masses. Chaque demi bielle 5 brute de forge ainsi positionnée est bridée dans ces deux paliers, par exemple, par des sabots 15 hydrauliques et au niveau du corps de bielle par une pince 16 également hydraulique. Chaque sabot 15 a une épaisseur inférieure au rayon de l'alésage des paliers correspondant de telle sorte qu'en position de serrage la surface 9 de jointure soit intégralement libre pour la trajectoire de la fraise d'usinage.

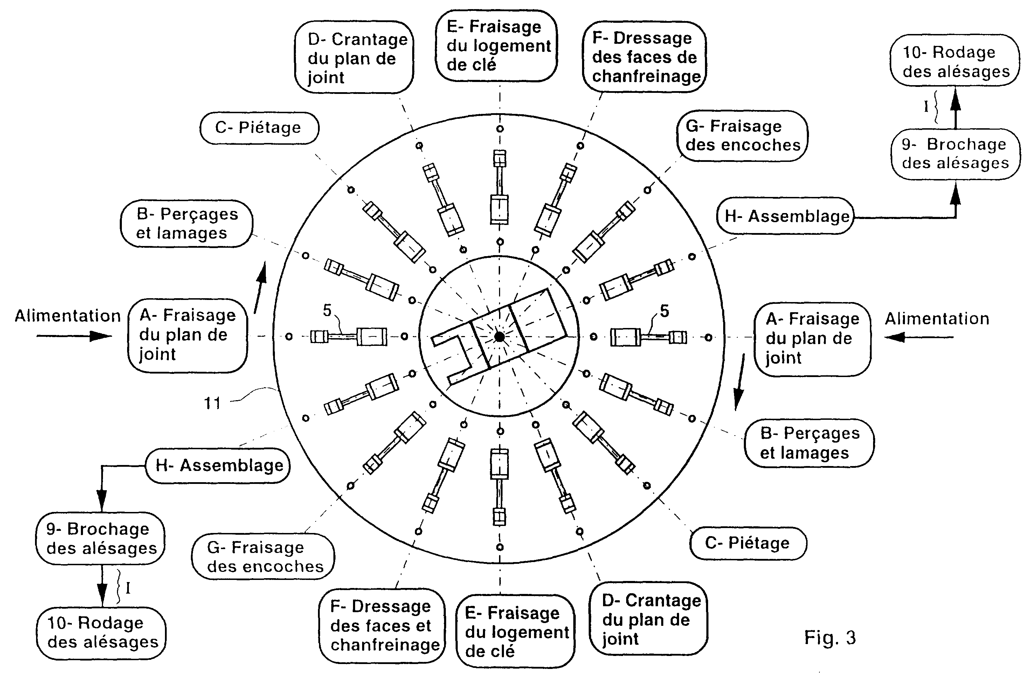

Comme représenté sur la figure 3, dans un exemple d'application, un plateau circulaire 11 pour la distribution de différentes opérations d'usinage comporte successivement les postes suivants :
- un poste A de fraisage de la surface 9 de jointure avec une fraise à surfacer,
- un poste B de perçage et de lamage, les outils étant situés sous le plateau de sorte que l'on puisse effectuer les perçages et les lamages dans une même opération. Les trous pour boulons d'assemblage ainsi que les logements par exemple d'un corps de clé de verrouillage du moyen de liaison des deux demi bielles sont effectués directement à la côte,
- un poste C de piétage sur lequel les demi bielles sont immobilisées par des pions hydrauliques à expansion situés sous le plateau.
Cette opération de piétage a pour but l'amélioration d'une part de la rigidité de la liaison des demi bielles sur le plateau 11 et d'autre part l'accès pour les opérations qui suivent,
- un poste D de crantage pour la réalisation des stries 10 selon l'invention.

Les outils sont des peignes présentant des dents courbes de préférence circulaires concentriques, le pas des dents pouvant être constant. La largeur des peignes et leur profil, éventuellement particulier, sont définis par les outilleurs.

Deux dispositifs peuvent être mis en place sur le plateau 11.

Les séries de peignes correspondant aux demi bielles en vis à vis sont décalés d'un demi pas, le profil des dents étant de manière évidente adapté. Dans ce cas, les demi bielles en position d'assemblage ont leurs demi paliers en vis à vis, à la tolérance de forgeage près. Il est alors nécessaire d'avoir deux jeux d'outil.

Les séries de peignes correspondant aux demi bielles 5 en vis à vis sont concentriques par rapport au plateau 11. Les stries 10 sont effectuées de manière identique sur les deux demi bielles en vis à vis. Un seul jeu d'outil est nécessaire mais lors de l'assemblage, les demi bielles en vis à vis sont décalées d'un demi pas de stries soit, par exemple, de 0,5 mm. Ce décalage ne gène pas le montage car le déplacement d'une demi bielle par rapport à l'autre reste faible. Il sera cependant nécessaire de prévoir une sur-épaisseur nominale d'usinage.
- un poste E de fraisage, par exemple, pour un logement de tête de clé de verrouillage et cela, en fonction de la solution apportée au verrouillage des deux demi bielles.
- un poste F de dressage des faces et chanfreinage des paliers de tête de bielle et de pied de bielle.

Pour pouvoir effectuer ces opérations, les sabots 15 hydrauliques sont dégagés, les demi bielles étant maintenues par les pions hydrauliques à expansion. Deux disques parallèles pour calibrer la largeur en tête de bielle et deux disques pour calibrer le pied de bielle peuvent effectuer cette opération par plongée verticale. Les disques peuvent comporter un épaulement coupant ou abrasif qui combiné à la trajectoire du centre, permet d'exécuter les chanfreins de part et d'autre des demi paliers.
- un poste G de fraisage des encoches de coussinet réalisées par un disque ou une fraise scie.
- un poste H d'assemblage destiné à assembler les deux demi bielles 5 en vis à vis, leurs stries s'emboîtant lorsque leur surface de jointure sont en contact. Pour effectuer cette opération d'assemblage, par exemple, une pince hydraulique logée dans le disque central du plateau saisit l'une des demi bielles entre les faces dressées. Après effacement sous le plateau du piétage de cette demi bielle, la mince hydraulique effectue un retournement de 180° pour amener les deux demi bielles en vis à vis, en position d'assemblage. Dans cette position, le piétage de la demi bielle inférieure qui n'a pas subi la rotation de 180° est retiré et les alésages de pions sont utilisés pour le passage des boulons d'immobilisation des deux demi bielles.

Après effacement des deux pinces hydrauliques les deux demi bielles, appairées, assemblées, formant la bielle sont déplacées vers un poste d'usinage des paliers.
- un poste I pour l'usinage des paliers.
Les paliers peuvent être usinés par brochage puis rodage, ou en fonction des côtes de forgeage, directement par rectification.

Certains des postes qui ne dépendent pas directement de l'ordre ci-dessus suivi peuvent être déplacés sans nuire au procédé.

## Revendications

1. Bielle forgée, notamment de moteur à combustion interne, comportant un corps (1), un pied (2) de bielle et une tête (3) de bielle, formant deux paliers de pied de bielle et de tête de bielle, destinés à recevoir respectivement, un axe de piston et une maneton de vilebrequin, ladite bielle étant constituée de deux demi bielles (5), sensiblement symétriques par rapport à un plan médian (6) longitudinal de la bielle, plan comprenant l'axe longitudinal de la bielle, leur surface de jointure (9) étant essentiellement disposée dans ledit plan médian (6), lesdites demi bielles (5) qui portent chacune un demi-palier (7) de pied de bielle et un demi-palier (8) de tête de bielle, étant liées entre elles par des moyens d'immobilisation, situés de part et d'autre du pied et de la tête de bielle, caractérisée en ce que les moyens d'immobilisation comprennent en outre, ménagées sur la surface de jointure (9) des demi bielles, des stries (10) s'emboîtant de manière complémentaire les unes dans les autres, stries assurant, par leur forme, un blocage en glissement des deux demi bielles (5) dans le plan de jointure, notamment dans l'axe longitudinal de la bielle et dans l'axe du maneton et du piston simultanément.

2. Bielle selon la revendication 1, caractérisée en ce que le moyen d'assemblage est composé de stries de forme courbe.

3. Bielle selon les revendications 1 à 2, caractérisée en ce que le moyen d'assemblage est composé de stries en forme d'arcs de cercle.

4. Bielle selon les revendications 1 à 3, caractérisée en ce que le moyen d'assemblage est composé de stries en forme d'arcs de cercle concentriques dont la concavité est orientée dans une seule direction.

5. Bielle selon les revendications 1 à 4, caractérisée en ce que le moyen d'assemblage est composé de stries dont la concavité est orientée suivant un axe confondu avec l'axe longitudinal de la bielle.

6. Procédé de réalisation d'une bielle selon les revendications 1 à 5, à partir de demi bielles brutes de forgeage, dans lequel on place des demi bielles brutes en périphérie d'un plateau (11) circulaire pour la distribution de différentes opérations d'usinage successives, caractérisé en ce que :
- on place et on bride les demi bielles brutes de forge par deux, de manière diamétralement opposée, la surface de jointure restant libre,
- on effectue sur chacune des deux demi bielles une opération de perçage de lamage et de dressage de la surface de jointure, perçage et lamage étant destinés à l'assemblage mécanique desdites demi bielles et au piétage des demi bielles sur le plateau,
- on réalise, sur la surface de jointure dressée des deux demi bielles, des stries (10) assurant, par leur forme, après assemblage des deux demi bielles en vis à vis, un blocage en glissement dans le plan de jointure, blocage notamment dans l'axe longitudinal de la bielle et dans l'axe du maneton et ou du piston simultanément.
- on effectue le dressage de faces parallèles définissant l'épaisseur de la tête ou du pied de bielle,
- on assemble les deux demi bielles par la rotation à 180° d'une demi bielle par rapport à un axe de rotation parallèle au plan du plateau (11) circulaire, les stries (10) s'emboîtant de manière complémentaire les unes dans les autres,
- on effectue l'usinage des alésages formant paliers de tête et pied de bielle.

7. Dispositif pour la réalisation d'une bielle selon les revendications 1 à 5, par le procédé selon la revendication 6, à partir de demi bielles brutes de forgeage, composé d'un plateau (11) circulaire pour la distribution de différentes opérations d'usinage successives, caractérisé en ce qu'il comprend de manière diamétralement opposée les postes d'usinage de même fonction suivants :
- une bride pour les demi bielles brutes de forge,
- un poste de perçage, de lamage et de dressage de la surface de jointure,
- un poste de piétage,
- un poste de crantage pour l'usinage de stries,
- un poste de dressage de faces parallèles définissant l'épaisseur de la tête ou du pied de bielle,
- un poste d'assemblage rotatif de deux demi bielles pour la pose de deux demi bielles l'une en vis à vis de l'autre, les stries s'emboîtant de manière complémentaire les unes dans les autres,
- un poste d'usinage des alésages qui forment paliers de tête et pied de bielle.
